# EUROPÄISCHE PATENTSCHRIFT

(11) **EP 3 302 957 B1**
(45) Veröffentlichungstag und Bekanntmachung des Hinweises auf die Patenterteilung: **19.02.2020**
(21) Anmeldenummer: 16724284.1
(22) Anmeldetag: 03.05.2016
(51) Int. Cl.: B32B 5/02, B32B 5/18, B32B 5/24, B32B 5/28, B32B 13/02, B32B 13/04, E04B 1/62

(54) **PLATTENFÖRMIGES BAUELEMENT MIT AUSSENMEMBRAN**
PLATE-TYPE COMPONENT WITH AN OUTER MEMBRANE
ÉLÉMENT STRUCTURAL EN FORME DE PLAQUE COMPRENANT UNE MEMBRANE EXTÉRIEURE

(30) Priorität: 27.05.2015 DE 102015108357
(43) Veröffentlichungstag der Anmeldung: 11.04.2018
(73) Patentinhaber: wedi GmbH, 48282 Emsdetten (DE)
(72) Erfinder: WEDI, Stephan, 48282 Emsdetten (DE)
(74) Vertreter: Träger, Denis
(86) Internationale Anmeldenummer: PCT/EP2016/000723
(87) Internationale Veröffentlichungsnummer: WO 2016/188607

(56) Entgegenhaltungen:
- DE-A1-102009 011 323
- DE-A1-102012 101 075
- DE-A1-102013 113 864
- DE-U1-202014 001 573

## Beschreibung

Die Erfindung betrifft ein Verfahren zur Herstellung eines plattenförmigen Bauelements in Schichtbauweise mit den Verfahrensschritten gemäß Anspruch 1. Die Erfindung betrifft weiterhin ein plattenförmiges Bauelement, das nach dem in Anspruch 1 beschriebenen Verfahren hergestellt ist, sowie die Verwendung einer Decklage zum Einbau in ein plattenförmiges Bauelement nach Anspruch 10 oder 11.

Ein plattenförmiges Bauelement ist in DE 101 31 338 A1 beschrieben. Als Decklage ist eine folienartige, vollflächig aufgebrachte Acrylharz-Dichtmasse vorgesehen, auf welcher über Fliesenkleber ein flächig zu verlegendes, beispielsweise keramisches Material auflegbar ist. Zwischen der Decklage und dem Tragkörper aus Hartschaum befindet sich eine Mörtelschicht, welche mit einer Gewebearmierung verstärkt werden kann. Nachteilig ist hierbei, dass das Auflegen der Decklage insbesondere beim noch nicht ausgehärteten Mörtel zu einer irreparablen Bläschenbildung führen kann.

Aus DE 10 2009 011 323 A1 ist eine Bauplatte mir einer getrockneten, mit mineralischem Klebstoff, zementgebundenem Mörtel oder gefüllter Dispersion getränkten Schaumstoffmatte bekannt. Die Schaumstoffmatte bleibt jedoch auch nach dieser Behandlung im Wesentlichen offenzellig und ist so besonders gut zur Schallabsorption geeignet und bildet im fertigen Zustand keinen wasserdichten Verbund aus.

Aus DE 10 2013 113 864 A1 ist ein Dämmelement zur Verwendung in einem Wärmedämm-Verbundsystem bekannt. Das Dämmelement umfasst eine diffusionsdichte Isolationsschicht und ist somit für die Durchleitung von Gasen ungeeignet.

Aus DE 20 2014 001 573 U1 ist eine Bauplatte mit dampfbremsender bzw. dampfsperrender Eigenschaft bekannt. Die Bauplatte ist insgesamt mehrlagig aufgebaut. Eine Mittellage besteht entweder aus einer dampfsperrenden Aluminiumfolie oder aus einem dampfbremsenden Kunststoffmaterial.

Aus DE 10 2012 101 075 A1 ist ein bahnförmiges Halbzeug, nämlich eine Putztapete, und ein Verfahren zu dessen Herstellung bekannt. Die Putztapete umfasst ein Vlies, welches mit einer Beschichtungsmasse durchtränkt wird und nach Aushärten die besagte Putztapete bildet. Diese Putztapete weist keine definierte Luftdurchlässigkeit auf. Insofern kann auch nicht sichergestellt werden, dass einerseits während des Aushärtprozesses freiwerden Gase durch das Vlies nach außen diffundieren und andererseits die Beschichtungsmasse selbst innerhalb des Vlieses gehalten wird.

Aus EP 1712169 B1 ist ein Duschbodenelement bekannt, bei dem eine wasserundurchlässige Folie zur Boden- und Wandabdichtung vorgesehen ist. Die Folie ist vollflächig mit einer Klebeschicht auf die Oberseite eines Trägerelementes aus Hartschaumstoff aufgeklebt.

Aus DE 10 2012 101 075 A1 ist ein bahnförmiges Halbzeug, nämlich eine Putztapete, bekannt. Um die Festigkeit der Putztapete zu verbessern ist das Trägermaterial von einer Beschichtungsmasse durchtränkt, wobei in die obere Schicht eine Armierungsschicht eingebettet ist.

Nachteilig an dieser Ausführungsform ist, dass ein Kleber auf mineralischer Mörtel-Basis zum Aufkleben der Folie ungeeignet ist. Hintergrund hierfür ist, dass mineralische Kleber immer einen gewissen Luftanteil beinhalten, der durch den Mischprozess eingebracht ist und bei der Aushärtung aus der Klebeschicht abgeführt bzw. ausgeschieden werden muss. Soweit die durch den Kleber zu verbindenden Elemente luftundurchlässig sind, bilden die im Mörtelkleber enthaltenen Luftanteile Bläschen aus, die weder durch die Folie noch durch die Hartschaumplatte entweichen können.

Die Bläschen steigen zum Teil entgegen der Schwerkraft nach oben hin auf und setzen sich unmittelbar unterhalb der Folie fest. Ein weiterer Teil der Bläschen steigt auf Grund der geringen Auftriebskraft innerhalb des Mörtelklebers nicht oder nur teilweise bis an die Oberfläche auf und wird vom aushärtenden Kleber an Ort und Stelle eingeschlossen.

Die Ausbildung von Luftbläschen kann somit bei dem in EP 1712169 B1 beschriebenen System nur durch Einsatz eines Klebers ohne Luftanteile, beispielsweise eines hotmelt-Klebers, verhindert werden. Dabei ergibt sich jedoch als weiteres Problem, dass es, ähnlich wie beim Aufbringen einer Schutzfolie auf ein Handy-Display, grundsätzlich schwierig ist, eine geschlossene Dichtfolie ohne Lufteinschlüsse auf einen Träger aufzubringen. Selbst bei Verwendung eines Klebers ohne Luftanteile können deshalb unterhalb der Folie Luftbläschen eingeschlossen werden.

Durch die im ausgehärteten Bauelement verbliebenen Luftbläschen wird die Haftverbundfläche zwischen Decklage und Trägerplatte erheblich reduziert. Hohlstellen sind die Folge, welche sich im Weiteren Nutzungszeitraum durch Kerbspannungen aus Setzungs-, bzw. Dehnungsspannungseinflüssen vergrößern können. Entsprechende Fehlstellen sind auch Fehlstellen in einem ansonsten geschlossenen Film und gefährden darüber hinaus die u.U. angenommene Wasserundurchlässigkeit der Beschichtungsebene.

Es stellt sich daher die Aufgabe, ein plattenförmiges Bauelement und ein Verfahren zu dessen Herstellung zu konzipieren, welches eine ganzflächige adhäsive Verbindung der Decklage mit der darunter liegenden Schicht ohne Bläschenbildung gewährleisten kann.

Diese Aufgabe ist durch ein Verfahren zur Herstellung eines plattenförmigen Bauelements mit den Verfahrensschritten gemäß Anspruch 1 gelöst. Die Decklage weist im unverbauten Zustand eine Luftdurchlässigkeit zwischen 6,0 und 21 l/dm²/min auf, wobei der Verbund aus Decklage und Klebstoffschicht einen wasserdichten Verbund bildet.

Die Aufgabe wird auch gelöst durch ein plattenförmiges Bauelement, welches mit dem beanspruchten Verfahren hergestellt ist und durch die Verwendung einer Decklage zur Herstellung eines Bauelementes, wobei die Decklage im unverbauten Zustand eine Luftdurchlässigkeit zwischen 6,0 und 21 l/dm²/min aufweist

Versuche gemäß DIN EN ISO 9237 (Bestimmung der Luftdurchlässigkeit von textilen Flächengebilden) haben ergeben, dass der bevorzugte Luftdurchlässigkeit-Wert der Decklage zwischen 10,0 und 14,0 l/dm²/min, insbesondere bevorzugt zwischen 12,5 und 13,5 l/dm²/min liegt.

Als Decklage soll eine poröse oder/und maschenartige Außenmembran bzw. Außenschicht verstanden werden, welche beispielsweise ein dichtes Metallnetz, eine perforierte Metall- oder Kunststofffolie oder ein Textilabschnitt ist. Vorzugsweise ist die Decklage in Form eines vorgefertigten, flächenhaften Verbundes aus mineralischem oder nicht-mineralischem Klebstoff auf Mörtel- oder Polymerbasis mit darin eingebettetem Textilabschnitt ausgeführt. Der Textilabschnitt kann aus wenigstens einer Textillage aus Gewebe, Gewirke, Gelege, Vliesstoff oder einer Kombination davon bestehen.

Soweit es sich bei der Decklage um ein Element mit unbestimmten Porenstrukturen, beispielsweise ein Vlies, handelt, ist es für die Erfindung wesentlich, dass diese unbestimmten Porenstrukturen die genannte definierte Luftdurchlässigkeit aufweisen. Soweit die definierte Luftdurchlässigkeit erreicht wird, in dem die Decklage eine definierte Perforation aufweist, weisen die einzelnen Poren vorzugsweise einen Durchmesser zwischen 25 µm und 500 µm, höchstvorzugsweise zwischen 50 µm und 250 µm, auf.

Bei dem Klebstoff handelt es sich beispielsweise um einen Polymer-Cement-Concrete (PCC-Mörtel). Unter einem PCC-Mörtel wird ein kunststoffmodifizierter, zementgebundener Mörtel verstanden, wie er beispielsweise im Bereich der Instandsetzung vorhandener Bausubstanz eingesetzt wird. Wichtig ist dabei, dass der Textilabschnitt bzw. der besagte Verbund einen oben erwähnten Wert der Luftdurchlässigkeit aufweist, mit dem erreicht wird, dass während des Aushärtungsprozesses der Klebstoffschicht die freigesetzten Gase, wie Luftpartikel durch die Poren oder Maschen des Verbundes nach außen passierbar sind, wobei der Verbund eine Barriere für die noch nicht erhärteten Klebstoffpartikeln bildet. Im Endeffekt entsteht eine ganzflächige Verbindung der Decklage mit der Klebstoffschicht ohne Bläschenbildung unterhalb der Decklage mit dem Ergebnis, dass die Decklage im ausgehärteten/verbundenen Zustand, sowie die Gesamtstruktur des plattenförmigen Bauelementes wasser- und gasundurchlässig ist.

Die Decklage weist folgende vorteilhafte Eigenschaften auf:
- Einerseits gewährleistet sie, dass die Luft sowohl während der Decklagenauflegung, als auch im frühen Aushärtungsprozess der Klebstoffschicht durch die Struktur der Decklage entweichen kann;
- Anderseits ist die Decklage so dicht, dass beim Aufkleben der Decklage auf den Tragkörper kein Klebstoff die Decklage durchdringen und damit deren freie Oberfläche verunreinigen kann.

Ein Fertigungsverfahren des plattenförmigen Bauelementes läuft folgendermaßen ab:
- Zuschneiden und Bereitstellen eines Tragkörpers und einer vorgefertigten Decklage;
- Auftragen eines Klebers, bei dem es sich vorzugsweise um einen PCC-Kleber handelt, und gleichmäßiges Verteilen zwecks Bildung einer Klebstoffschicht;
- Auflegen der vorgefertigten Decklage auf die noch zähflüssige Klebstoffschicht;
- Aufpressen der Decklage unter Druck;
- wenn erforderlich, Zuführen von Wärme zur forcierten Aushärtung.

Die Klebstoffschicht kann auf die Decklage vor in Kontaktbringung mit dem Tragkörper aufgetragen sein.

Zum Aufpressen der Decklage unter Druck ist eine an sich bekannte Membranpresse einsetzbar. In einer Membranpresse wird über eine mit Druck beaufschlagte Membran ein Pressdruck auf das sich beispielsweise auf einem Presstisch abstützende Bauelement aufgebracht. Besonders bevorzugt ist, wenn die Membran einen Unterdruck-Innenraum für das Bauelement ausbildet. Dies geschieht, indem die Membran das Bauelement zunächst beutelartig umhüllt und dann die im Innenraum enthaltene Luft abgesaugt wird. Der Atmosphären-Druck presst dann die Membran gegen die Oberfläche der Decklage. Vorteilhaft hierbei ist, dass der im Innenraum erzeugte Unterdruck auch die Entlüftung des Mörtelklebers unterstützt indem die sich in der Klebschicht im Aushärtprozess bildenden Luftbläschen durch die luftdurchlässige Decklage abgesaugt werden.

Die plattenförmigen Bauelemente gemäß der Erfindung sind in vielfältigen Variationen im Baugewerbe einsetzbar. Insbesondere finden sie im Sanitärbereich, beispielsweise als verfliesbare Duschbodenplatten, aber auch als Auskleidungelemente und Halbzeug zur Fertigung von Elementen der Badausstattung, Verwendung.

Weitere Merkmale und Vorteile der Erfindung sind den nachfolgenden Ausführungsbeispielen zu entnehmen.

Die Ausführungsbeispiele sind anhand der Zeichnung näher erläutert. Die Figuren zeigen:
- Fig. 1a: eine Decklage in Form eines Verbundes bestehend aus einer in einer Mörtelschicht eingebetteten Vlieslage, in einem schematischen Schnitt durch die Decklage;
- Fig. 1b: den Verbund wie in Fig. 1a dargestellt, jedoch mit einer zusätzlichen Gewebe-Lage; Fig. 2a einen Tragkörper aus Hartschaum mit einseitig aufgebrachter Mörtelschicht, in einem schematischen Schnitt;
- Fig. 2b: ein plattenförmiges Bauelement, aufweisend den Tragkörper gemäß Fig. 2a mit aufgeklebter Decklage, in einem schematischen Schnitt;
- Fig. 3a: die auf eine mineralische, nicht erhärtete Mörtelschicht aufgelegte Decklage,
- Fig. 3b: die Decklage gemäß Fig. 3a unmittelbar vor dem Verbinden mit dem Tragkörper,
- Fig. 3c: ein Bauelement mit der Decklage gemäß Fig. 3a nach dem Aushärten der Mörtelschicht, in einem schematischen Schnitt;
- Fig. 4: ein Bauelement, aufweisend einen beidseitig mit Mörtelschichten und Decklagen abgedeckten Tragkörper, in einem schematischen Schnitt;
- Fig. 5: ein Bauelement gemäß Fig. 2b, mit angedeuteter zusätzlicher Schutzschicht, in einem schematischen Schnitt;
- Fig. 6: ein Bauelement gemäß Fig. 2b, zusätzlich beschichtet mit einer Farbschicht, in einem schematischen Schnitt und
- Fig. 7: ein weiteres Bauelement in Anlehnung auf Fig. 2b, mit zwei übereinander liegenden Decklagen, ebenso in einem schematischen Schnitt.

Gleiche oder ähnliche Elemente können in den nachfolgenden Figuren mit gleichen oder ähnlichen Bezugszeichen versehen sein. Ferner enthalten die Figuren der Zeichnung, deren Beschreibung sowie die Ansprüche zahlreiche Merkmale in Kombination. Einem Fachmann ist dabei klar, dass diese Merkmale auch einzeln betrachtet werden oder sie zu weiteren, hier nicht näher beschriebenen Kombinationen zusammengeführt werden können.

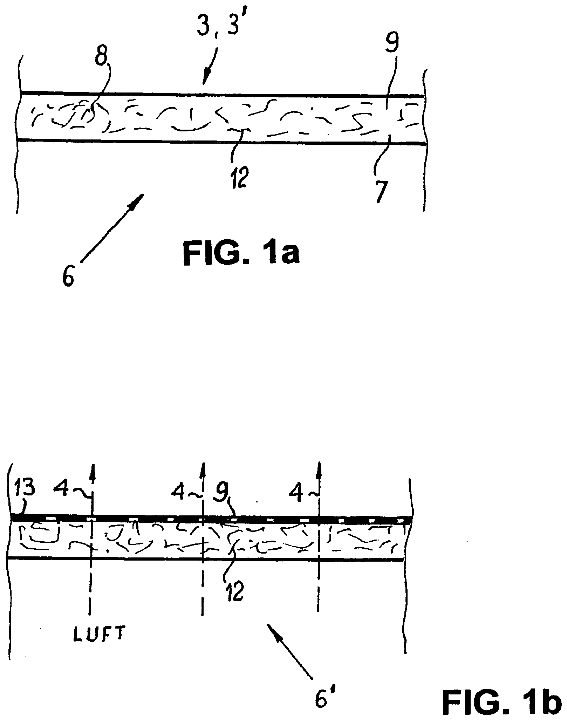

In Fig. 1a ist zunächst eine Decklage 3, 3' schematisch gezeigt, welche einen Verbund 6 darstellt, der einen in einem mineralischen Klebstoff 7 eingebetteten Textilabschnitt 8 umfasst. Der Textilabschnitt 8 ist ein in Figur übertrieben dick gezeichneter Vliesstoff 12 (nonwoven) aus Polymerfasern, die in einer Wirrlage, d.h. relativ gleich verteilt in allen Richtungen des Vliesstoffes vorliegen.

Die Fig. 1b zeigt wiederum eine Kombination des Vliesstoffes 12 mit einem Gelege 13, die zusammen mit dem Klebstoff 7 einen weiteren Verbund 6' bilden. Die beiden Verbünde 6, 6' weisen zahlreiche Poren bzw. Maschen 9 auf, durch welche das mit Pfeilen (Bezugszahl 4) angedeutete Gas, wie Luft, hindurch treten kann. Als Klebstoff 7 ist ein nicht-mineralischer Polymermörtel gewählt. Die Vliesstoff-Gelege-Kombination selbst (gegebenenfalls eingebettet im Polymermörtel) ist im Ausgangszustand luftdurchlässig und wasserdurchlässig.

Der optimale Luftdurchlässigkeit-Wert der Decklage gemäß Fig. 1b (im unverbauten Zustand) liegt im Bereich zwischen 12,5 und 13,5 l/dm2/min.

Insgesamt ist die Decklage 3, 3' gemäß Fig. 1b etwa 1,5 bis 3 mm dick.

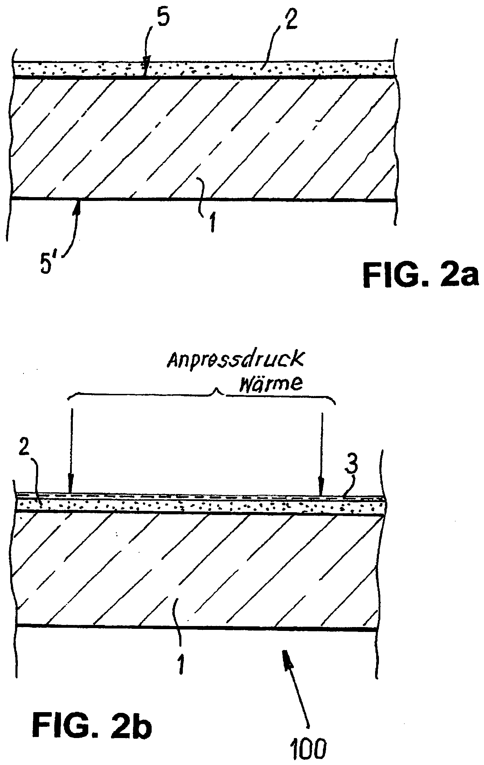

In Fig. 2a ist ein Tragkörper 1 gezeigt, welcher durch zwei im Wesentlichen planparallel zueinander liegende Flachseiten 5, 5' begrenzt ist. Der Tragkörper 1 besteht aus extrudiertem, geschlossenzelligen Polystyrol-Hartschaum (XPS). Die Wasserdampfdiffusionswiderstandszahl des verwendeten Polystyrol-Hartschaums (XPS) beträgt etwa 150 µ.

Auf die Flachseite 5 des Tragkörpers 1 ist eine Klebstoffschicht 2 aufgebracht, im vorliegenden Fall aus kunststoffmodifiziertem, zementgebundenen Mörtel (PCC), mit dem sich die erforderliche Härte in der Oberfläche erzielen lässt. Die Flachseite 5 des Tragkörpers 1 kann leicht muldenförmig oder geneigt gegenüber der anderen, ebenen Flachseite 5' ausgeführt sein.

Gemäß Fig. 2b ist auf die noch flüssige Klebstoffschicht 2 (Mörtelschicht) eine diese überdeckende Decklage 3 unter Anpressdruck und Wärmeeinwirkung eingebracht, so dass nach dem Aushärten der Mörtelschicht 2 ein plattenförmiges Bauelement 100 entstanden ist, bei dem der Tragkörper 1 mit der vorgefertigten Vlies-Gelege-Kombination verbunden ist. Dabei ist die zweite, der Flachseite 5 abgewandte Flachseite 5', unbehandelt, d. h. sie weist keine Klebstoffschicht und keine Decklage auf.

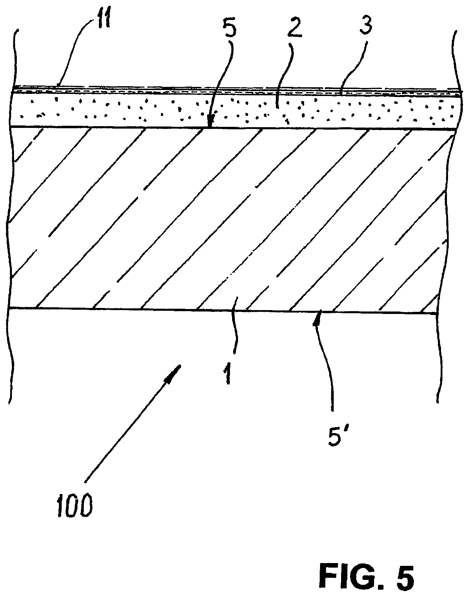

Ein ähnliches Bauelement 100 ist in Fig. 5 dargestellt, mit dem Unterschied, dass auf die Decklage 3 eine Schutzschicht 11, vorzugsweise Klarlack, aufgetragen ist. Die Beschichtung mit dem Klarlack schützt die Oberfläche der Decklage 3 vor äußeren Einflüssen. Die Schutzschicht 11 kann auch abziehbar sein, beispielsweise indem sie mit einem Release-Klebstoff überzogen ist.

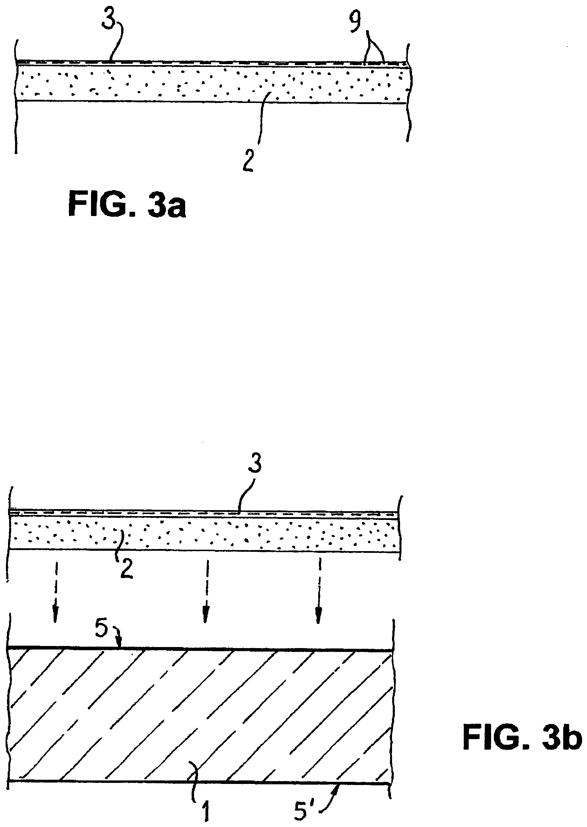

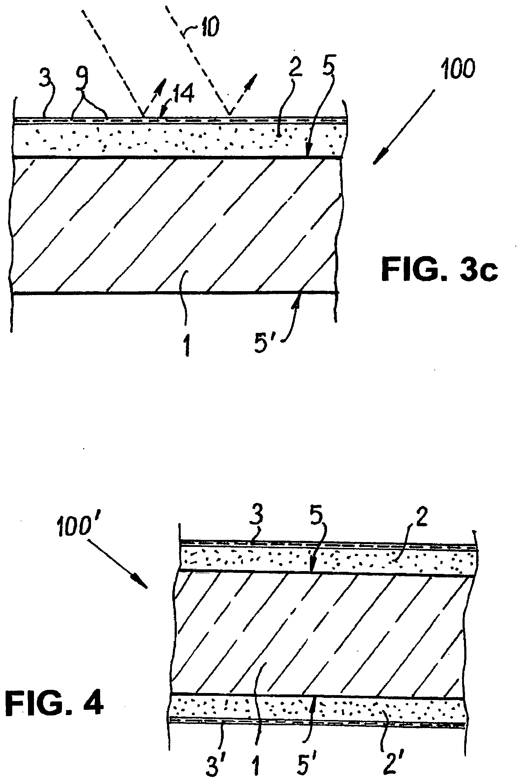

Gemäß Fig. 3a ist die Decklage 3 zunächst auf die mineralische, nicht erhärtete Klebstoffschicht 2 unter Bildung einer Kombination Decklage/Klebstoff aufgebracht, welche gemäß Fig. 3b auf die Flachseite 5 des Tragkörpers 1 aufgelegt ist. Nach der Aushärtung ergibt sich das in Figuren 2b und 3c gezeigte, luft- und wasserdichte Bauelement 100. Mit der Bezugszahl 10 sind Wasser- bzw. Feuchtmoleküle bezeichnet, die gegen eine freie Oberfläche 14 der Decklage 3 prallen (z. B. als Wasserstrahl), jedoch nicht durch die Decklage 3 nicht hindurchdringen.

In einer vorteilhaften Weiterbildung des Erfindungsgegenstandes wird vorgeschlagen, ein plattenförmiges Bauelement 100' gemäß Fig. 4 auszubilden, bei dem beide Flachseiten 5, 5' des Tragkörpers 1 mit der Klebstoffschicht 2, 2' und der Decklage 3 überdeckt sind. Nach der Aushärtung ist die Gesamtstruktur des beidseitig beschichteten Tragkörpers 1 wasser- und luftdicht.

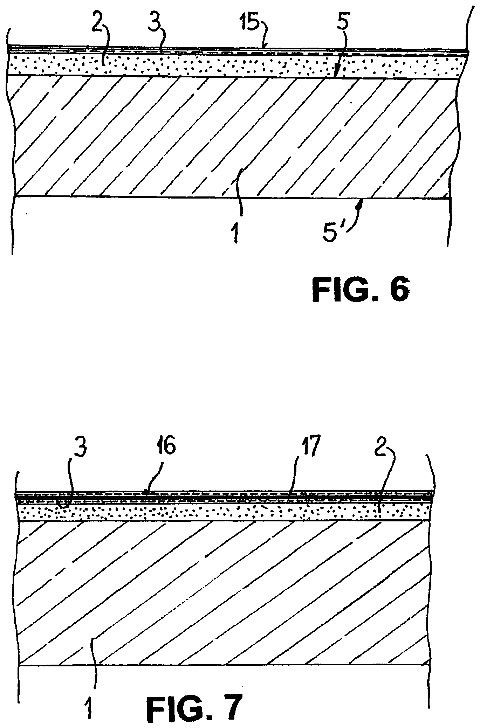

Gemäß Fig. 6 ist die Decklage 3 mit einer weiteren Beschichtung 15, nämlich mit Farbschicht überzogen. Als Farbschicht ist ein auf Kunststoffdispersion basierter, lösungsmittelarmer Acryllack gewählt worden, mit dem sich ein wasserfester Film erzielen lässt. Der Farbton kann an eine Hersteller- bzw. Firmenindividuelle Farbgebung (beispielsweise blau) durch entsprechende Pigmentierung angepasst sein.

Die Fig. 7 zeigt zwei übereinander liegende und über eine polymere Klebeschicht 17 miteinander verbundene, vorgefertigte Decklagen 3 und 16. Die Decklagen 3 und 16 können materialmäßig gleich oder unterschiedlich sein. So kann beispielsweise die der Klebstoffschicht 2 zugewandte Decklage 3 eine Kombination Vliesstoff/Gelege und die äußere Decklage 16 eine Kombination Vliesstoff/Gewebe aufweisen.

Die plattenförmigen Bauelemente gemäß den Figuren 6 und 7 stellen eine Weiterbildung des durch die Fig. 2b beschriebenen Bauelementes 100.

Für alle oben beschriebenen Bauelemente 100, 100' gilt Folgendes:
- Der Tragkörper 1 kann aus anderen mineralischen oder nicht-mineralischen Werkstoffen, beispielsweise aus EPS-Hartschaum, Polyurethanhartschaum, Holzfasern, Mineralwolle etc. oder gemischten Materialien gefertigt sein;
- Der Tragkörper 1 kann in Draufsicht aus seine Flachseite 5, 5' polygonal, insbesondere rechteckig und/oder wenigstens teilweise oval oder abgerundet sein;
- Der mineralische oder nicht-mineralische Klebstoff kann als Mörtel bezeichnet werden;
- In die Klebstoffschicht 2, 2' kann eine an sich bekannte Armierung eingebaut sein.

### Bezugszeichenliste

- 1: Tragkörper
- 2, 2': Klebstoffschicht
- 3, 3': Decklage
- 4: Gas (Luft)
- 5, 5': Flachseite
- 6, 6': Verbund
- 7: Klebstoff
- 8: Textilabschnitt
- 9: Poren oder Maschen
- 10: Feuchtmoleküle
- 11: Schutzschicht (Klarlack)
- 12: Vliesstoff
- 13: Gewebe / Gelege
- 14: Oberfläche
- 15: zusätzliche Beschichtung
- 16: weitere Decklage
- 17: Klebeschicht
- 100, 100': Bauelement

## Patentansprüche

1. Verfahren zur Herstellung eins plattenförmigen Bauelementes (100; 100') mit den Verfahrensschritten:
- Zuschneiden und Bereitstellen eines Tragkörpers (1) und einer vorgefertigten Decklage (3, 3');
- Auftragen eines Polymermörtel (PCC-Kleber) und gleichmäßiges Verteilen zwecks Bildung einer Klebstoffschicht (2, 2');
- Auflegen der vorgefertigten Decklage (3, 3') auf die noch zähflüssige Klebstoffschicht (2, 2');
- Aushärten des im Bauelement (100; 100') enthaltenen Klebers,
**dadurch gekennzeichnet, dass** die vorgefertigte Decklage (3, 3') eine Luftdurchlässigkeit zwischen 6,0 und 21 l/dm²/min aufweist und nach Auflegen der Decklage (3, 3') auf die noch zähflüssige Klebstoffschicht (2, 2') über eine mit Druck beaufschlagte Membran einer Membranpresse ein Pressdruck auf das Bauelement (100; 100') aufgebracht wird und dass während des Aushärtprozesses der Klebstoffschicht (2, 2') freigesetzte Gase, wie Luftpartikel, durch die Poren oder Maschen des Verbundes nach außen passierbar sind, wobei der Verbund eine Barriere für noch nicht erhärtete Klebstoffpartikel bildet und im Endeffekt eine ganzflächige Verbindung der Decklage (3, 3') mit der Klebstoffschicht (2, 2') ohne Bläschenbildung unterhalb der Decklage (3, 3') entsteht mit dem Ergebnis, dass die Decklage (3, 3') im ausgehärteten/verbundenen Zustand, sowie die Gesamtstruktur des plattenförmigen Bauelements (100; 100') wasser- und gasundurchlässig ist.

2. Verfahren zur Herstellung eines plattenförmigen Bauelementes (100; 100') nach Anspruch 1, **dadurch gekennzeichnet, dass** die Membran der Membranpresse einen Unterdruck-Innenraum für das Bauelement (100; 100') ausbildet indem sie das Bauelement (100; 100') zunächst beutelartig umhüllt und dann im Innenraum enthaltene Luft abgesaugt wird, so dass die Membran gegen die Oberfläche der Decklage (3, 3') gepresst wird und der im Innenraum erzeugte Unterdruck die Entlüftung des Klebers unterstützt.

3. Verfahren zur Herstellung eines plattenförmigen Bauelementes (100; 100') nach Anspruch 1 oder 2, **dadurch gekennzeichnet, dass** die Decklage (3, 3') eine Luftdurchlässigkeit zwischen 10,0 und 14,0 l/dm²/min, bevorzugt zwischen 12,5 und 13,5 l/dm²/min aufweist.

4. Verfahren zur Herstellung eines plattenförmigen Bauelementes (100, 100') nach einem der Ansprüche 1 bis 3, **dadurch gekennzeichnet, dass** die Decklage (3, 3') vorerst auf die mineralische, nicht erhärtete Klebstoffschicht (2, 2') aufgelegt wird, welche wiederum mit dem Tragkörper (1) verbindbar ist.

5. Verfahren zur Herstellung eines plattenförmigen Bauelementes (100; 100') nach einem der Ansprüche 1 bis 4, **dadurch gekennzeichnet, dass** die Decklage (3, 3') unter Einwirkung von erhöhter Temperatur mit der Klebstoffschicht (2, 2') verbunden wird.

6. Verfahren zur Herstellung eines plattenförmigen Bauelementes (100; 100') nach einem der Ansprüche 1 bis 5, **dadurch gekennzeichnet, dass** der Verbund (6, 6') der Decklage (3, 3') mit der Klebstoffschicht (2, 2'), als auch die Aushärtezeit der Klebstoffmasse der Klebstoffschicht (2, 2') durch die Einwirkung von Anpressdruck und/oder Temperatur gesteuert beschleunigt werden kann.

7. Verfahren zur Herstellung eines plattenförmigen Bauelementes (100; 100') nach einem der Ansprüche 1 bis 6, **dadurch gekennzeichnet, dass** auf die Decklage (3, 3') wenigstens eine polymere Schutzschicht (11) wie Klarlack, aufgetragen wird.

8. Verfahren zur Herstellung eines plattenförmigen Bauelementes (100; 100') nach einem der Ansprüche 1 bis 7, **dadurch gekennzeichnet, dass** die Decklage (3, 3') mit wenigstens einer weiteren Beschichtung (15) mit mineralischer Masse oder Farbschicht überzogen wird.

9. Verfahren zur Herstellung eines plattenförmigen Bauelementes (100; 100') nach einem der Ansprüche 1 bis 8, **dadurch gekennzeichnet, dass** die Decklage (3, 3') mit einer weiteren vorgefertigten Decklage (16) abgedeckt wird.

10. Plattenförmiges Bauelement (100; 100') in Schichtbauweise, hergestellt nach dem Verfahren in Anspruch 1, umfassend eine Decklage mit einer Luftdurchlässigkeit welche im unverbauten Zustand zwischen 6,0 und 21 l/dm²/min beträgt.

11. Plattenförmiges Bauelement (100; 100') in Schichtbauweise nach Anspruch 10, **dadurch gekennzeichnet, dass** die Luftdurchlässigkeit der Decklage im unverbauten Zustand einen Wert zwischen 10,0 und 14,0 l/dm²/min, vorzugsweise zwischen 12,5 und 13,5 l/dm²/min aufweist.

12. Verwendung einer Decklage (3, 3') mit einer Luftdurchlässigkeit zwischen 6,0 und 21 l/dm²/min, vorzugsweise zwischen 10,0 und 14,0 l/dm²/min, höchst vorzugsweise zwischen 12,5 und 13,5 l/dm²/min, zum Einbau in ein plattenförmiges Bauelement (100; 100') nach Anspruch 10 oder 11.

## Claims

1. A method of forming a sheet component (100; 100') with the steps of:
- formatting and providing a supporting body (1) and a prefabricated cover ply (3, 3');
- applying a polymer mortar (PCC adhesive) and uniformly distributing same to form an adhesive layer (2, 2');
- laying the prefabricated cover ply (3, 3') onto the still viscid adhesive layer (2, 2');
- curing the adhesive present in the component (100; 100'),
**characterized In that** the prefabricated cover ply (3, 3') has an air transmission rate between 6.0 and 21 l/dm2/min and after laying the cover ply (3, 3') onto the still viscid adhesive layer (2, 2') a pressurized membrane of a membrane press applies a molding pressure to the component (100; 100') and **in that** gases, such as air particles, evolving during the curing process of the adhesive layer (2, 2') are capable of passing outside through the pores or meshes of the composite, wherein the composite forms a barrier to still uncured particles of adhesive and ultimately a whole-areal bond of the cover ply (3, 3') to the adhesive layer (2, 2') is formed without bubbles forming underneath the cover ply (3, 3') with the outcome that the cover ply (3, 3') in its cured/composited state, and also the overall structure of the sheet component (100; 100') is water and gas impervious.

2. The method of forming a sheet component (100; 100') as claimed in claim 1, **characterized in that** the membrane of the membrane press develops an underpressure interior for the component (100; 100') by initially enveloping the component (100; 100') in bag-like fashion and then air in the interior is aspirated away, so the membrane is pressed against the surface of the cover ply (3, 3') and the underpressure generated in the interior augments the deaeration of the adhesive.

3. The method of forming a sheet component (100; 100') as claimed in claim 1 or 2, **characterized in that** the cover ply (3, 3') has an air transmission rate between 10.0 and 14.0 l/dm2/min, preferably between 12.5 and 13.5 l/dm2/min.

4. The method of forming a sheet component (100; 100') as claimed in any one of claims 1 to 3, **characterized in that** the cover ply (3, 3') is first laid onto the mineral, uncured adhesive layer (2, 2') which in turn is bondable to the supporting body (1).

5. The method of forming a sheet component (100; 100') as claimed in any one of claims 1 to 4, **characterized in that** the cover ply (3, 3') is bonded to the adhesive layer (2, 2') by application of elevated temperature.

6. The method of forming a sheet component (100; 100') as claimed in any one of claims 1 to 5, **characterized in that** the compositing (6, 6') of the cover ply (3, 3') with the adhesive layer (2, 2') is hastenable in a controlled manner by the application of contact pressure and/or heat as is the curing period of the adhesive material of the adhesive layer (2, 2').

7. The method of forming a sheet component (100; 100') as claimed in any one of claims 1 to 6, **characterized in that** the cover ply (3, 3') has applied to it at least one polymeric protective layer (11) such as clear lacquer.

8. The method of forming a sheet component (100; 100') as claimed in any one of claims 1 to 7, **characterized in that** the cover ply (3, 3') is overcoated with at least one further coating (15) comprising mineral matter or paint layer.

9. The method of forming a sheet component (100; 100') as claimed in any one of claims 1 to 8, **characterized in that** the cover ply (3, 3') is covered up with a further prefabricated cover ply (16).

10. A sheet component (100; 100') in layered construction, produced as claimed in claim 1, comprising a cover ply having an air transmission rate which is between 6.0 and 21 l/dm2/min in the uninstalled state.

11. The sheet component (100; 100') in layered construction as claimed in claim 10, **characterized in that** the air transmission rate of the cover ply in the uninstalled state has a value between 10.0 and 14.0 l/dm2/min, preferably between 12.5 and 13.5 l/dm2/min.

12. The method of using a cover ply (3, 3') having an air transmission rate between 6.0 and 21 l/dm2/min, preferably between 10.0 and 14.0 l/dm2/min, most preferably between 12.5 and 13.5 l/dm2/min, for installation into a sheet component (100; 100') as claimed in claim 10 or 11.

## Revendications

1. Procédé de fabrication d'un élément de construction en forme de plaque (100, 100') comprenant les étapes suivantes :
- Découpage et mise à disposition d'un élément porteur (1) et d'une couche de revêtement préfabriquée (3, 3') ;
- Application d'un mortier polymère (mortier colle PCC) et répartition uniforme pour obtenir une couche adhésive (2, 2') ;
- Application de la couche de revêtement préfabriquée (3, 3') sur la couche adhésive encore visqueuse (2, 2') ;
- Durcissement de la colle contenue dans l'élément de construction (100, 100'), **caractérisé par le fait que** la couche de revêtement préfabriquée (3, 3') présente une perméabilité à l'air située entre 6,0 et 21 l/dm2/min et qu'après l'application de la couche de revêtement (3, 3') sur la couche adhésive (2, 2') encore visqueuse, une pression est exercée sur l'élément de construction (100, 100') par la membrane sous pression d'une presse à membrane, et que pendant le processus de durcissement de la couche adhésive (2, 2'), les gaz dégagés tels que des particules d'air peuvent être transportés vers l'extérieur à travers les pores ou mailles de l'assemblage, alors que l'assemblage forme une barrière pour les particules de cotte pas encore durcies, et qu'au final, la couche de revêtement (3, 3') adhère sur toute sa surface à la couche adhésive (2, 2') sans que des bulles se forment sous la couche de revêtement (3, 3'), de sorte que la couche de revêtement (3, 3') à l'état durci/relié, de même que la structure globale de l'élément de construction en forme de plaque (100, 100'), est imperméable à l'eau et aux gaz.

2. Procédé de fabrication d'un élément de construction en forme de plaque (100,100') suivant la revendication 1, **caractérisé par le fait que** la membrane de la presse à membrane forme pour l'élément de construction (100, 100') un espace intérieur basse pression en enveloppant dans un premier temps l'élément de construction (100, 100') à la manière d'un sac, avant que l'air contenu dans l'espace intérieur soit aspiré de façon à ce que la membrane soit pressée contre la surface de la couche de revêtement (3, 3') et à ce que la basse pression créée dans l'espace intérieur contribue à désaérer l'adhésif.

3. Procédé de fabrication d'un élément de construction en forme de plaque (100, 100') suivant la revendication 1 ou 2, **caractérisé par le fait que** la couche de revêtement (3, 3') présente une perméabilité à l'air située entre 10,0 et 14,0 l/dm2/min, et de préférence entre 12,5 et 13,5 l/dm2/min.

4. Procédé de fabrication d'un élément de construction en forme de plaque (100, 100') suivant une des revendications 1 à 3, **caractérisé par le fait que** la couche de revêtement (3, 3') est appliquée dans un premier temps sur la couche adhésive (2, 2') minérale non durcie qui peut elle-même être assemblée à l'élément porteur (1).

5. Procédé de fabrication d'un élément de construction en forme de plaque (100, 100') suivant une des revendications 1 à 4, **caractérisé par le fait que** la couche de revêtement (3, 3') est assemblée à la couche adhésive (2, 2') sous l'action d'une température élevée.

6. Procédé de fabrication d'un élément de construction en forme de plaque (100, 100') suivant une des revendications 1 à 5, **caractérisé par le fait que** l'assemblage (6, 6') de la couche de revêtement (3, 3') avec la couche adhésive (2, 2'), de même que le temps de durcissement de la composition adhésive de la couche adhésive (2, 2'), peut être accéléré par pression mécanique et/ou régulation de la température.

7. Procédé de fabrication d'un élément de construction en forme de plaque (100, 100') suivant une des revendications 1 à 6, **caractérisé par le fait qu'**on applique au minimum une couche protectrice polymère (11) telle qu'un vernis sur la couche de revêtement (3, 3').

8. Procédé de fabrication d'un élément de construction en forme de plaque (100, 100') suivant une des revendications 1 à 7, **caractérisé par le fait qu'**on applique au minimum une pellicule supplémentaire (15), masse minérale ou couche de peinture, sur la couche de revêtement (3, 3').

9. Procédé de fabrication d'un élément de construction en forme de plaque (100, 100') suivant une des revendications 1 à 8, **caractérisé par le fait que** la couche de revêtement (3, 3') est recouverte d'une couche de revêtement préfabriquée (16) supplémentaire.

10. Elément de construction en forme de plaque (100, 100') composé de plusieurs couches, fabriqué suivant le procédé décrit dans la revendication 1, comprenant une couche de revêtement présentant une perméabilité à l'air, avant assemblage, située entre 6,0 et 21 l/dm2/min.

11. Elément de construction en forme de plaque (100, 100') composé de plusieurs couches suivant la revendication 10, **caractérisé par le fait que** la perméabilité à l'air de la couche de revêtement avant assemblage est située entre 10,0 et 14,0 l/dm2/min, de préférence entre 12,5 et 13,5 l/dm2/min.

12. Utilisation d'une couche de revêtement (3, 3') présentant une perméabilité à l'air située entre 6,0 et 21 l/dm2/min, de préférence entre 10,0 et 14,0 l/dm2/min, mieux entre 12,5 et 13,5l/dm2/min, dans le but d'être assemblée à un élément de construction en forme de plaque (100, 100') suivant la revendication 10 ou 11.
